# EUROPÄISCHE PATENTSCHRIFT

(11) **EP 3 091 177 B1**
(45) Veröffentlichungstag und Bekanntmachung des Hinweises auf die Patenterteilung: **20.12.2017**
(21) Anmeldenummer: 15166680.7
(22) Anmeldetag: 07.05.2015
(51) Int. Cl.: F01D 5/02, F01D 11/00, F01D 17/16

(54) **ROTOR FÜR EINE STRÖMUNGSMASCHINE UND VERDICHTER**
ROTOR FOR A FLOW ENGINE AND COMPRESSOR
ROTOR POUR UNE TURBOMACHINE ET COMPRESSEUR

(43) Veröffentlichungstag der Anmeldung: 09.11.2016
(73) Patentinhaber: MTU Aero Engines AG, 80995 München (DE)
(72) Erfinder: Albers, Lothar, 80638 München (DE)

(56) Entgegenhaltungen:
- US-A- 4 835 827
- US-A- 5 628 621

## Beschreibung

Die vorliegende Erfindung betrifft einen Rotor für eine Strömungsmaschine gemäß dem Oberbegriff des Anspruchs 1. Des Weiteren betrifft die vorliegende Erfindung einen Verdichter gemäß Anspruch 11.

Rotoren für Strömungsmaschinen müssen vielfältige Anforderungen und Randbedingungen erfüllen. Beispielsweise sollten einzelne Rotorstufen ausgewuchtet werden können, um im Betrieb bei hohen Drehzahlen verschleißarm und wartungsarm betrieben werden zu können. Weiterhin sollten Rotoren bauraumoptimiert sein und ein geringes Gewicht aufweisen, um wirtschaftliche Randbedingungen zu erfüllen, wie beispielsweise ein geringer Kerosinverbrauch. Schließlich sollten mögliche Ölansammlungen in Kavitäten im Rotorinnenraum, beispielsweise von Lagerölansammlungen, aus dem Rotorinnenraum abfließen können, um mögliche Kontaminationen von Kabinenluftströmungen durch Verdichterabblasungen zu vermeiden. Derartige Rotoren sind zum Beispiel aus der US 4 835 827 A oder der US 5 628 621 A bekannt.

Eine Aufgabe der vorliegenden Erfindung ist es, einen Rotor für eine Strömungsmaschine vorzuschlagen, der wenigstens einen Rotorarm mit einem Wuchtring umfasst. Ferner ist es Aufgabe der vorliegenden Erfindung, einen Verdichter mit einem erfindungsgemäßen Rotor vorzuschlagen.

Die erfindungsgemäße Aufgabe wird durch einen Rotor mit den Merkmalen des Anspruchs 1 gelöst. Sie wird ferner durch einen Verdichter mit den Merkmalen des Anspruchs 11 gelöst. Erfindungsgemäß wird somit ein Rotor für eine Strömungsmaschine vorgeschlagen, wobei der Rotor wenigstens einen ersten Rotorgrundkörper und einen zweiten Rotorgrundkörper aufweist. Der zweite Rotorgrundkörper weist einen Rotorarm mit einer Anordnung zum formschlüssigen Anflanschen, insbesondere mittels eines Paßsitzes, des ersten Rotorgrundkörpers an den zweiten Rotorgrundkörper auf. Die Anordnung zum formschlüssigen Anflanschen weist auf der radial äußeren Seite des Rotorarms wenigstens einen Wuchtring auf. Der Wuchtring kann als Wuchtbund bezeichnet werden. Der Wuchtring des erfindungsgemäßen Rotors ist integral mit dem Rotorarm zum formschlüssigen Anflanschen des zweiten Rotorgrundkörpers an den ersten Rotorgrundkörper verbunden.

Der integral mit dem Rotorarm verbundene Wuchtring kann ein mittels einer kraftschlüssigen Presspassung mit dem Rotorarm verbundener Wuchtring sein. Insbesondere ist ein integral mit dem Rotorarm verbundener Wuchtring kein Wuchtring, der mittels einer Schraubverbindung und/oder einer formschlüssigen Verbindung ohne Presspassung mechanisch einfach lösbar wäre. Ein mittels einer Preßpassung integral mit dem Rotorarm verbundener Wuchtring kann vorteilhaft mit Hilfe eines materialabtragenden Verfahrens, z. B. Fräsen, Bohren oder Schleifen, ausgewuchtet werden, ohne das der Wuchtring von dem Rotor teilweise oder vollständig demontiert werden muss.

Die Anordnung zum formschlüssigen Anflanschen des zweiten Rotorgrundkörpers an den ersten Rotorgrundkörper ist am stromauf und/ oder am stromab gelegenen Ende des Rotorarms angeordnet. Die Anordnung umfasst somit wenigstens einen am stromauf und/ oder am stromab gelegenen Ende des Rotorarms angeordneten Abschnitt des Rotorarms und den mit diesem Abschnitt des Rotorarms integral verbundenen Wuchtring.

Der Wuchtring ist auf der radial äußeren Seite des Rotors, insbesondere auf der radial äußeren Seite einer Rotortrommel des Rotors, angeordnet. Die radial äußere Seite des Rotors kann als Rotoraußenraum bezeichnet werden. Insbesondere ist der Wuchtring nicht im Rotorinnenraum, also innerhalb der Rotortrommel, angeordnet.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

Im Folgenden werden als Strömungsmaschinen rein beispielhaft insbesondere Gasturbinen beschrieben, ohne jedoch Strömungsmaschinen auf Gasturbinen beschränken zu wollen. Die Strömungsmaschine kann insbesondere eine axiale Strömungsmaschine sein. Die Gasturbine kann insbesondere eine axiale Gasturbine, beispielsweise eine Fluggasturbine, sein.

Der Begriff "Rotor", wie er hierin verwendet wird, bezeichnet einen Rotationskörper in einer Strömungsmaschine, der sich im bestimmungsgemäßen Gebrauch um eine Rotationsachse oder Drehachse der Strömungsmaschine dreht. Der Rotor umfasst wenigstens eine Rotorstufe. Eine Rotorstufe kann als Laufrad bezeichnet werden oder ein Laufrad umfassen. Eine Rotorstufe umfasst wenigstens mehrere Laufschaufeln und einen Rotorgrundkörper. Der Rotorgrundkörper kann als Scheibe, Rotorscheibe, Ring oder Rotorring bezeichnet werden oder diese umfassen. Ein Rotor kann eine oder mehrere Rotorstufen umfassen.

Ein Rotor kann in eine Strömungsmaschine, insbesondere in eine Gasturbine, eingebaut und montiert werden. Ein Flugtriebwerk kann eine Gasturbine sein oder eine Gasturbine umfassen. Ein Flugtriebwerk kann einen Verdichter mit mehreren Verdichterstufen und eine Turbine mit mehreren Turbinenstufen umfassen. Verdichterstufen und Turbinenstufen können jeweils Rotorstufen und Statorstufen aufweisen.

Die Laufschaufeln eines Rotors können als Schaufeln bezeichnet werden und weisen wenigstens jeweils ein Schaufelblatt, einen Schaufelfuß und eine Schaufelplattform auf. Die Schaufeln können separat, beispielsweise formschlüssig mittels einer wieder lösbaren sogenannten Schwalbenschwanzverbindungen, oder integral mit dem Rotorgrundkörper verbunden sein. Separate Schaufeln können wieder lösbar und/oder formschlüssig und/oder stoffschlüssig mit dem Rotorgrundkörper verbunden sein. Eine integrale Verbindung ist insbesondere eine materialschlüssige Verbindung. Eine integrale Verbindung kann mittels eines generatives Herstellungsverfahrens gefertigt werden. Ein Rotorgrundkörper mit integral mit dem Rotorgrundkörper verbundenen Schaufeln kann als integral beschaufelter Rotor bezeichnet werden. Ein integral beschaufelter Rotor kann ein sogenannter BLISK (Bladed Disk) oder ein BLING (Blade Ring) sein.

Der Rotorgrundkörper kann nach radial innen gerichtete Rotorscheiben und/oder axial ausgerichtete Rotorarme umfassen. Die nach radial innen gerichteten Rotorscheiben können als Verlängerungen oder T-förmige Verlängerungen der Laufschaufeln bezeichnet werden.

Die Rotorarme können als Trommelkörper bezeichnet werden. Der Rotor ist zum direkten oder indirekten Verbinden mit einer Welle der Strömungsmaschine ausgestaltet oder vorbereitet. Eine indirekte Verbindung kann mittels Nabe und/oder mittels weiterer Rotoren ausgeführt sein. Bei einer direkten Verbindung kann der Rotor direkt an die Welle angeflanscht sein.

Der Begriff "Rotortrommel", wie er hierin verwendet wird, bezeichnet Abschnitte von wenigstens zwei axial miteinander verbundenen Rotorgrundkörpern. Insbesondere Rotorarme können eine Rotortrommel ausbilden. Eine Rotortrommel kann gleichfalls über mehr als zwei Rotorgrundkörper sowie optional über mehrere Rotorarme und Rotorscheiben ausgebildet sein. Beispielsweise können mehrere Rotorgrundkörper eines achtstufiger Verdichters in einer Strömungsmaschine eine Rotortrommel ausbilden.

Die Begriffe "Rotorinnenraum und Rotoraußenraum", wie sie hierin verwendet werden, bezeichnen die Räume innerhalb und außerhalb der Rotortrommel von Rotoren. Der Rotorinnenraum wird somit nach radial außen im Wesentlichen durch einen oder mehrere Rotorarme begrenzt. In axialer Richtung wird der Rotorinnenraum im Wesentlichen durch Rotorscheiben begrenzt, wobei zwischen einer Welle, mit der die Rotortrommel direkt oder indirekt verbunden ist und den Rotorscheiben im Allgemeinen ein Spalt ausgebildet ist. Der Rotoraußenraum wird nach radial innen im Wesentlichen durch einen oder mehrere Rotorarme begrenzt. Der Rotoraußenraum umfasst im Wesentlichen den Hauptdurchströmungskanal der Strömungsmaschine. Zwischen einem Rotorarm und dem Hauptdurchströmungskanal können weiterhin beispielsweise Leitradinnenringe, mit oder ohne Einlaufdichtungen, angeordnet sein. Der Rotorinnenraum und/oder der Rotoraußenraum kann mehrere Rotorstufen umfassen.

Axial hintereinander angeordnete Rotorgrundkörper können mittels Rotorarmen und/oder Rotorscheiben miteinander verbunden sein. Die Verbindung ist insbesondere formschlüssig und/oder kraftschlüssig.

Innerhalb der Rotortrommel können ringförmige Wuchtbünde, insbesondere an der Innenseite der Rotorarme angeordnet sein. Die Wuchtbünde können kraftschlüssig mit den Rotorarmen verbunden sein. Weiterhin können innerhalb der Rotortrommel alternativ oder zusätzlich weitere Wuchtvorrichtungen, beispielsweise Flansche mit über dem Umfang befestigten Wuchtgewichten, angeordnet sein.

In bestimmten erfindungsgemäßen Ausführungsformen sind die Rotorgrundkörper, also der erste und der zweite Rotorgrundkörper, zur Aufnahme von Laufschaufeln zum Ausbilden einer ersten Rotorstufe mit dem ersten Rotorgrundkörper und einer zweiten Rotorstufe mit dem zweiten Rotorgrundkörper vorbereitet.

In gewissen erfindungsgemäßen Ausführungsformen sind die Rotorgrundkörper integral mit Laufschaufeln verbunden. Ein Laufrad, das einen Rotorgrundkörper mit mehreren auf dem Umfang angeordneten und integral verbundenen Laufschaufeln aufweist, kann als sogenannter "Blisk" bezeichnet werden. Der Begriff "Blisk" setzt sich aus den Einzelbegriffen "Blade" (Schaufel) und "Disk" (Scheibe) zusammen (Blisk: Blade Integrated Disk). Ein "Blisk" ist eine Rotor-Konstruktion, bei der die Scheibe und die Schaufel aus einem Stück hergestellt werden können.

In einigen erfindungsgemäßen Ausführungsformen sind die Rotorgrundkörper formschlüssig, insbesondere wieder lösbar, mit den Laufschaufeln verbunden. Eine formschlüssige und wieder lösbare Verbindung kann eine sogenannten Schwalbenschwanzverbindung sein.

In manchen erfindungsgemäßen Ausführungsformen weist der Rotorarm wenigstens eine Dichtspitze zum Verringern von Leckageströmen zwischen dem Rotor und statischen Bauteilen der Strömungsmaschine, insbesondere dem Leitrad, auf. Das Leitrad kann als Statorstufe bezeichnet werden.

In einigen erfindungsgemäßen Ausführungsformen sind die Dichtspitzen zum Ausbilden eines Dichtspalts gegen eine Einlaufdichtung angeordnet. Die Einlaufdichtung kann an einem radial inneren Endbereich eines Innenrings eines Leitrads angeordnet sein. Insbesondere weist ein Leitrad verstellbare Leitschaufeln auf, die einerseits verstellbar im Gehäuse der Strömungsmaschine und andererseits in dem Innenring mittels Innenzapfen drehbar angeordnet sein können.

In bestimmten erfindungsgemäßen Ausführungsformen ist die radiale Erstreckung des Wuchtrings kleiner als die radiale Erstreckung der Dichtspitzen. Anders ausgedrückt ist der Außendurchmesser des Wuchtrings kleiner als der Außendurchmesser der Dichtspitzen. Der Außendurchmesser der Dichtspitzen kann annähernd dem Innendurchmesser der Einlaufdichtung entsprechen (bei mehreren Einlaufdichtungen bezieht sich der Innendurchmesser auf den kleinsten Innendurchmesser der Einlaufdichtungen). Dadurch kann vorteilhaft die Montage und Demontage von dem Laufrad und dem Leitrad (mit Innenring) in der Strömungsmaschine erleichtert werden.

In gewissen erfindungsgemäßen Ausführungsformen ist der Rotorarm aus einem ersten Material hergestellt oder weist ein erstes Material auf. Der Wuchtring kann aus einem zweiten Material hergestellt sein oder ein zweites Material aufweisen. Das erste Material und das zweite Material sind dabei unterschiedlich. Dadurch kann beispielsweise ein Aufschrumpfprozess des Wuchtrings auf den Rotorarm und/ oder ein Materialabtrag des Wuchtrings zum Zweck des Auswuchten vorteilhaft vereinfacht werden.

In manchen erfindungsgemäßen Ausführungsformen weist der Wuchtring wenigstens einen Bereich zur Materialentnahme zum Auswuchten des Rotors auf dem Umfang des Wuchtrings auf.

In einigen erfindungsgemäßen Ausführungsformen weist der erste Rotorgrundkörper einen Wuchtflansch mit wenigstens einem Wuchtgewicht auf. Insbesondere weist der Wuchtflansch über dem Umfang (in Hauptdurchströmungsrichtung betrachtet) eine nicht durchgehende Kontur auf. Eine durchgehende Kontur wäre beispielsweise eine geschlossene, ringförmige Kontur. Aufgrund der nicht durchgehenden Kontur des Wuchtflansches kann sich keine Kavität mit einem Ansammeln von Flüssigkeit auf einer axialen Seite des Wuchtflansches ausbilden. Somit kann sich vorteilhaft keine Flüssigkeit fliehkraftbedingt während einer Rotation des Rotorgrundkörpers ausbilden. Trotzdem können auf dem Umfang verteilt Wuchtgewichte an dem Wuchtflansch fixiert werden.

In bestimmten erfindungsgemäßen Ausführungsformen weist der Rotorarm eine Öffnung zum Durchtritt von Fluiden aus dem Rotorinnenraum in den Rotoraußenraum auf. Durch die Öffnung kann beispielsweise Lageröl, insbesondere kondensierter Lagerölnebel von einer in unmittelbarer Nähe der Rotorstufe angeordneten Nabe, während der Rotation des erfindungsgemäßen Rotors in den Hauptdurchströmungskanal abgeschleudert werden.

Der erfindungsgemäße Verdichter einer Strömungsmaschine weist wenigstens einen erfindungsgemäßen Rotor und wenigstens eine Staturstufe mit einem Innenring auf. Der Verdichter kann ein Hochdruckverdichter eines Flugtriebwerks sein.

Manche oder alle erfindungsgemäßen Ausführungsformen können einen, mehrere oder alle der oben und/oder im Folgenden genannten Vorteile aufweisen.

Mittels des erfindungsgemäßen Rotors können Ölansammlungen, beispielsweise Lagerölansammlungen, im Rotorinnenraum, also innerhalb der Rotortrommel, vorteilhaft vermieden oder zumindest verringert werden. Insbesondere ermöglicht es die Anordnung des Wuchtrings auf der radial äußeren Seite des Rotors, nur noch kleine oder überhaupt keine Kavitäten, in denen sich Öl ansammeln kann, sogenannte Totwassergebiete, in der Rotortrommel entstehen zu lassen. Dadurch kann die Möglichkeit, dass sich Kontaminationen von Kabinenluft durch Lageröl, bei einer Anwendung des Rotors in einem Flugtriebwerk, zumindest verringert werden.

Der erfindungsgemäße Rotor kann in Turbinen und/ oder Verdichtern eingesetzt werden. Durch die Positionierung des Wuchtrings in einem axialen Endbereich des Rotorarms kann der Bauraum und das Gewicht des Rotors und damit der Strömungsmaschine vorteilhaft optimiert werden. Dadurch können sich wirtschaftliche Vorteile ergeben, beispielsweise durch einen geringeren Kerosinverbrauch und/ oder eine kompakte Bauform.

Die Anordnung des Wuchtrings außerhalb der Rotortrommel, und damit eine Anordnung auf einem größeren Durchmesser gegenüber einer Anordnung des Wuchtrings innerhalb der Rotortrommel, kann zu einer Verringerung der Masse und des Gewichts der Flanschanordnung (Anordnung zum formschlüssigen Anflanschen eines weiteren Rotorgrundkörpers) führen. Dies kann vorteilhaft zu einer Reduzierung des Gewichts der Rotorstufe führen.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils schematisch vereinfachten Figuren gilt:
- **Fig. 1**: zeigt einen erfindungsgemäßen Rotor mit einem Wuchtring, einem angeflanschten zweiten Rotorgrundkörper an einen ersten Rotorgrundkörper sowie mit einem Leitrad in Schnittdarstellung;
- **Fig. 2**: zeigt einen Detailausschnitt aus Fig. 1 mit den Abständen zwischen dem Innenring des Leitrads und dem ersten Rotorgrundkörper sowie dem Wuchtring des zweiten Rotorgrundkörpers und dem Innenring;
- **Fig. 3**: zeigt einen Detailausschnitt aus Fig. 1 mit einer weiteren Wuchtringgeometrie;
- **Fig. 4**: zeigt einen Detailausschnitt aus Fig. 1 mit einer noch weiteren Wuchtringgeometrie;
- **Fig. 5**: zeigt einen Detailausschnitt aus Fig. 1 mit verschiedenen Strömungsverhältnissen um den Wuchtring;
- **Fig. 6**: zeigt unterschiedliche Wuchtebenen an einer Rotorstufe;
- **Fig. 7**: zeigt eine perspektivische Darstellung eines Ausschnitts eines Rotorgrundkörpers mit einem Wuchtring; und
- **Fig. 8**: zeigt die perspektivische Darstellung aus Fig. 7 mit einem Beispiel eines ausgewuchteten Wuchtrings.

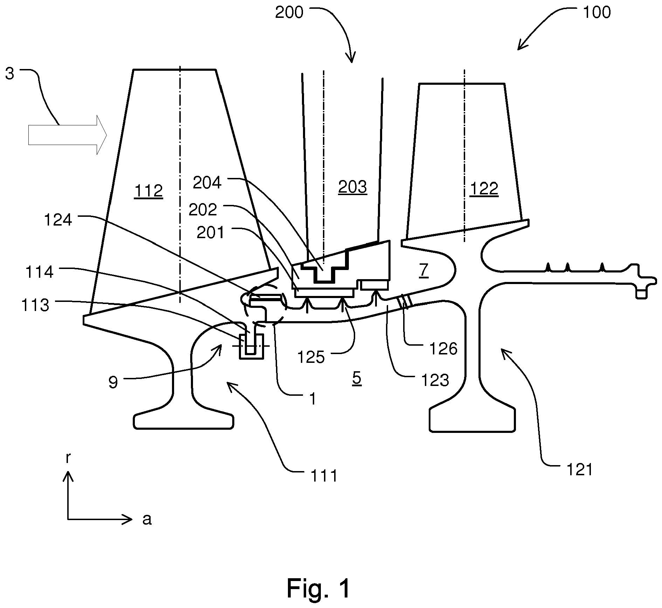

**Fig. 1** zeigt einen erfindungsgemäßen Rotor 100 mit einem Wuchtring 124, einem angeflanschten zweiten Rotorgrundkörper 121 an einen ersten Rotorgrundkörper 111 sowie einem Leitrad 200 in Schnittdarstellung.

Der zweite Rotorgrundkörper 121 umfasst einen Rotorarm 123 mit einer Anordnung 1 zum formschlüssigen Anflanschen des zweiten Rotorgrundkörpers 121 an den ersten Rotorgrundkörper 111. Die Anordnung 1 umfasst einen integral mit dem Rotorarm 123 verbundenen Wuchtring 124 am axial vorderen Ende (stromauf) des Rotorarms 123. Die Axialrichtung a ist in der Hauptdurchströmungsrichtung 3 der Strömungsmaschine orientiert.

Der integral mit dem Rotorarm 123 verbundene Wuchtring 124 ist mittels einer kraftschlüssigen Presspassung mit dem Rotorarm 123 verbunden. Die Laufschaufeln 112, 122 sind integral mit den Rotorgrundkörpern 111, 121 verbunden.

In Fig. 1 weist der Rotorarm 123 weiterhin Dichtspitzen 125 auf, die mit sogenannten Einlaufdichtungen 201 einen Spalt zur Minimierung einer Leckageströmung zwischen dem Rotor 100 und einem Leitrad 200 ausbilden. Die Einlaufdichtungen 201 sind mit einem Innenring 202 verbunden, der wiederum mit den radial inneren Enden der Leitschaufeln 203 verbunden ist. Die Leitschaufeln 203 sind drehbar und verstellbar mittels Innenzapfen 204 in dem Innenring 202 gelagert.

Der Rotorarm 123 weist weiterhin eine radiale Bohrung 126 auf, durch die beispielsweise im Rotorinnenraum 5 (innerhalb der Rotortrommel) angesammelte Ölmengen (z. B. Lageröl) in den Hauptströmungsbereich in den Rotoraußenraum 7 abfließen können. Die radiale Bohrung 126 kann als Ölabschleuderbohrung bezeichnet werden. Insbesondere in Kavitäten 9 im Bereich von Wuchtflanschen 114 (mit angeschraubten, separaten Wuchtgewichten 113) könnten sich derartige Ölansammlungen bilden. Aufgrund der Anordnung des Wuchtrings 124 auf der radial äußeren Seite des Rotorarms 123 (und nicht auf der radial inneren Seite des Rotorarms 123) des erfindungsgemäßen Rotors 100 können Ölansammlungen aus den Kavitäten 9, vorausgesetzt der Wuchtflansch 114 ist nicht als über dem Umfang durchgehender Ring ausgeführt, fliehkraftbedingt während der Rotation des Rotors 100 durch die radial Bohrung 126 teilweise oder vollständig in den Rotoraußenraum 7 abfließen. Aufgrund des im Rotoraußenbereich 7 angeordneten Wuchtrings 124 des erfindungsgemäßen Rotors 100 können Ölansammlungen in den Kavitäten 9 vorteilhaft, vollständig oder weitgehend, vermieden werden.

Der erste Rotorgrundkörper 111 ist mittels einer ringförmigen und formschlüssigen wieder lösbaren Verbindung mittels der Anordnung 1 mit dem zweiten Rotorgrundkörper 121 verbunden. Der integral mit dem Rotorarm 123 verbundene Wuchtbund 124 weist keinen strukturmechanischen Einfluss auf die formschlüssige Verbindung der Anordnung 1 auf. Ein strukturmechanischer Einfluss könnte beispielsweise eine Deformation der der Anordnung 1 aufgrund eines, konstruktiv anders als in Fig. 1 ausgeführten Preßsitzes mit Spannungszuständen im Material sein.

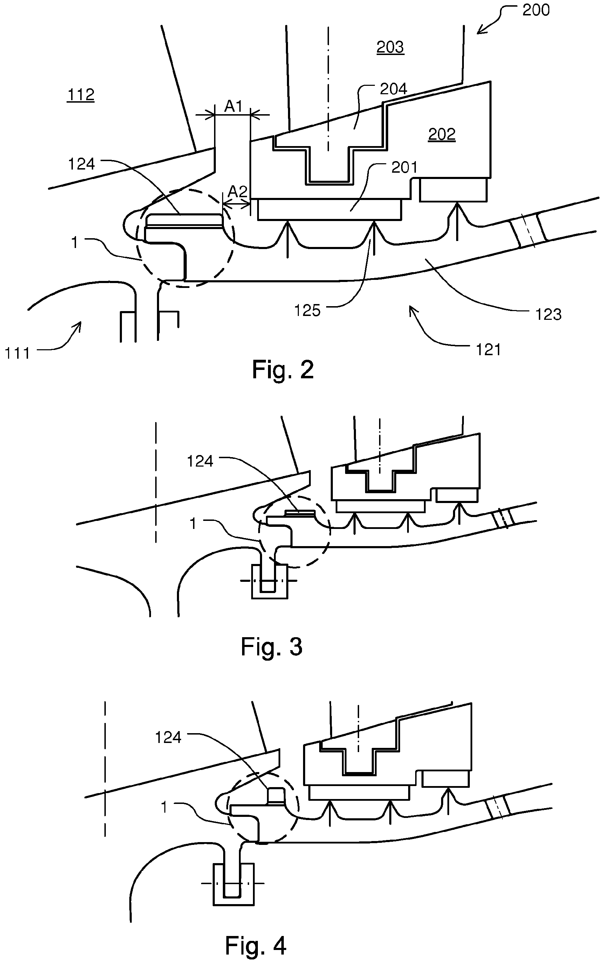

**Fig. 2** zeigt einen Detailausschnitt aus Fig. 1 mit einem Abstand A1 zwischen dem Innenring 202 des Leitrads 200 und dem ersten Rotorgrundkörper 111 sowie einen Abstand A2 zwischen dem Wuchtring 124 und dem Innenring 202.

Der Abstand A1 zwischen dem Innenring 202 des Leitrads 200 und dem ersten Rotorgrundkörper 111 weist in der Regel einen konstruktiv und betriebsbedingt festgelegten Mindestabstand auf, um eine Berührung der beiden Bauteile zu vermeiden. Der Abstand A2 zwischen dem Wuchtring 124 und dem Innenring 202 weist weiterhin in der Regel mindestens den Wert des Abstands A1 auf, um eine Berührung dieser Bauteile zu vermeiden. Der erfindungsgemäße Rotor 100 ermöglicht aufgrund der integralen Bauweise des Wuchtrings 124 mit dem Rotorarm 123 im Bereich der Anordnung 1 vorteilhaft eine Reduzierung des axialen Bauraums der Laufrad- und Leitradanordnung im Bereich des Wuchtrings 124. Eine Reduzierung des Bauraums kann beispielsweise das Gewicht der Strömungsmaschine vorteilhaft reduzieren.

**Fig. 3** zeigt einen Detailausschnitt aus Fig. 1 mit einer weiteren Wuchtringgeometrie. Der Wuchtring 124 weist eine gegenüber der Fig. 1 und der Fig. 2 axial geringere Ausdehnung oder Abmessung auf. Die jeweilige Dimensionierung und konstruktive Ausgestaltung des Wuchtrings 124 kann beispielsweise je nach der Art der Strömungsmaschine und möglichen Betriebszuständen angepasst werden.

**Fig. 4** zeigt einen Detailausschnitt aus Fig. 1 mit einer noch weiteren Wuchtringgeometrie. Der Wuchtring 124 ist gegenüber dem Wuchtring 124 aus Fig. 3 axial verkürzt und radial erweitert. Die Querschnittsform des Wuchtrings 124 ist annähernd quadratisch.

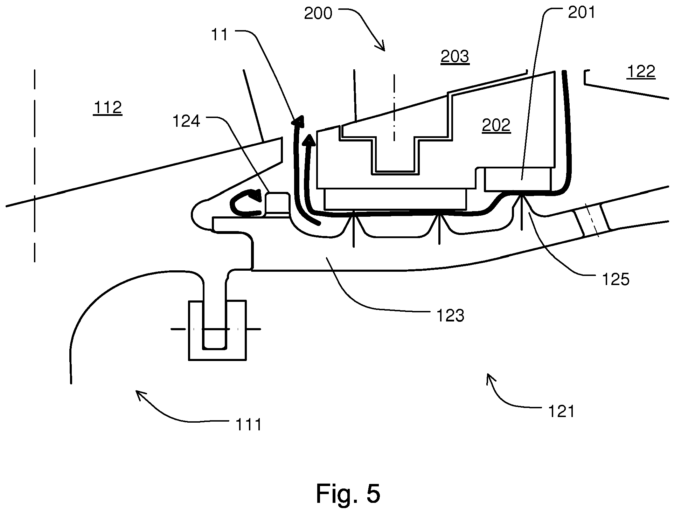

**Fig. 5** zeigt einen Detailausschnitt aus Fig. 1 mit verschiedenen Strömungsverhältnissen um den Wuchtring 124. Die Umströmung des Innenrings 202 (Leckageströmung 11 zwischen den Dichtspitzen 125 und der Einlaufdichtung 201), die sogenannte Kavitätenströmung, erfolgt ohne wesentliche Störungen. Lediglich zwischen dem Wuchtring 124 und dem ersten Rotorgrundkörper 111 ist ein kleiner Wirbel außerhalb der Leckageströmung 11 erkennbar.

Geringe Verwirbelungen (sogenannte "Windage") führen in der Regel zu einer geringen Reibleistung. Höhere Reibleistungen können zu thermodynamischen Verlusten und höheren Lufttemperaturen in den Rotorkavitäten führen. Die höheren Lufttemperaturen können dann bei einem Wiedereinströmen der Leckageströmung 11 in den Gaskanal (Hauptströmungskanal) zu aerodynamischen Verlusten und zu einer Verringerung des Wirkungsgrades der Strömungsmaschine, z. B. eines Verdichterwirkungsgrades, führen.

Die dargestellten Strömungsverhältnisse um den Wuchtring 124 können somit mittels des erfindungsgemäßen Rotors 100 zu einer geringen oder vernachlässigbaren Störung der Leckageströmung 11 führen.

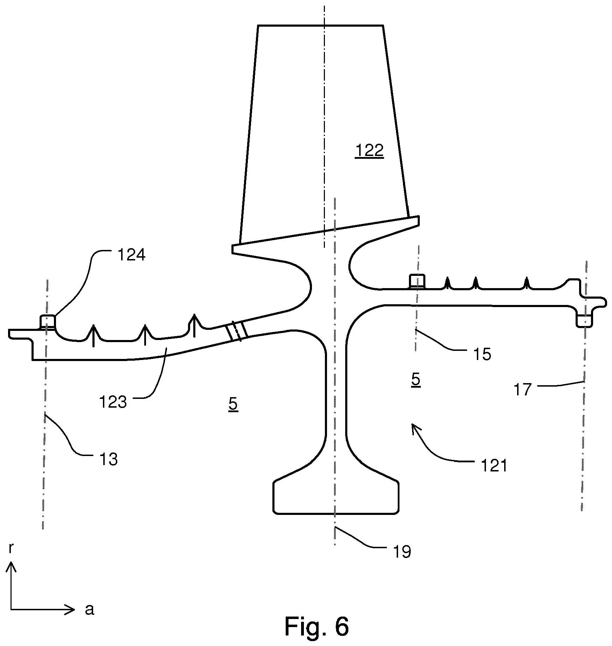

**Fig. 6** zeigt unterschiedliche Wuchtebenen 13, 15, 17 an dem Rotorgrundkörper 121. Jedoch stellt nur die Wuchtebene 13 eine Wuchtebene eines erfindungsgemäßen Rotors 100 dar. Die Wuchtebenen 15 und 17 sind lediglich für die folgenden Erläuterungen dargestellt.

Die Position und Anordnung der Wuchtebenen 13, 15, 17 wird in Bezug zu einer Schwerpunktsebene 19 des Laufrades (zweiter Rotorgrundkörper 121, Rotorarm 123, Laufschaufeln 122) betrachtet. Grundsätzlich können Laufräder (oder einzelne Rotorstufen) statisch und dynamisch ausgewuchtet werden. Wenn das Laufrad dynamisch ausgewuchtet werden soll, ist der Abstand der Wuchtebene 13, 15, 17 von der Schwerpunktsebene 19 ein relevanter Parameter. Bei einem dynamischen Wuchten ist es vorteilhaft, wenn die Wuchtebene 13, 15, 17 axial möglichst weit von der Schwerpunktsebene 19 entfernt ist, um die Wuchtmasse der Wuchtrings 124 klein und gewichtssparend ausgelegen zu können.

Bei den dargestellten Wuchtebenen 13, 15, 17 ist insbesondere die Wuchtebene 13 des zweiten Rotorgrundkörper 121 vorteilhaft, weil diese weit von der Schwerpunktsebene 19 entfernt ist. Die Wuchtebene 17 (der Wuchtring ist hier im Rotorinnenraum 5 angeordnet) liegt dagegen näher an der Schwerpunktsebene 19. Insbesondere der Wuchtring der Wuchtebene 15 ist ungünstig angeordnet, da er nahe an der Schwerpunktsebene 19 positioniert ist. Dieser Wuchtring der Wuchtebene 15 müsste daher größer und schwerer im Vergleich zu den Wuchtringen der Wuchtebenen 13 und 17 dimensioniert werden.

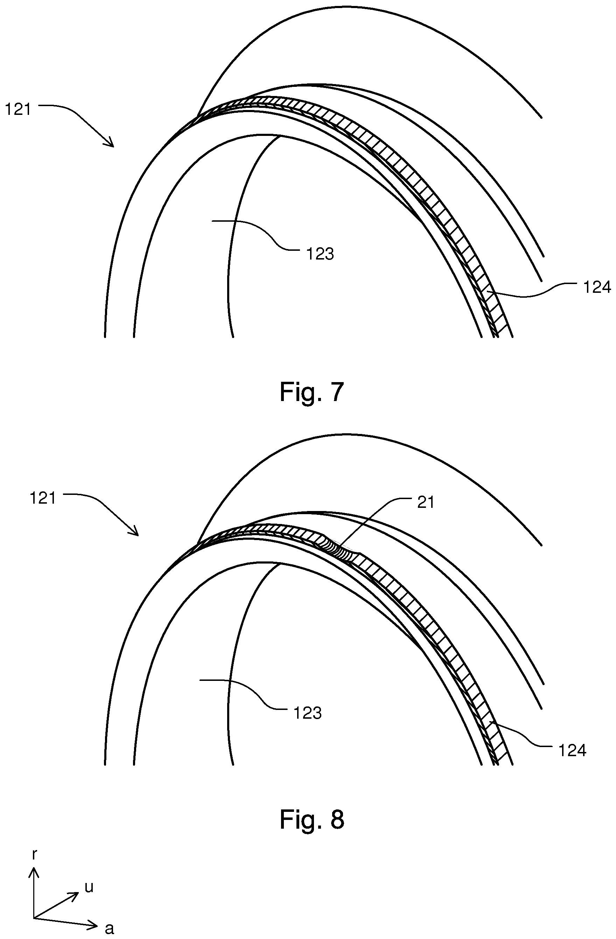

**Fig. 7** zeigt eine perspektivische Darstellung eines Ausschnitts eines erfindungsgemäßen Rotors 100 mit einem Wuchtring 124. Zur Verdeutlichung ist der Wuchtrings 124 auf dem Rotorarm 123 schraffiert dargestellt. Zur Vereinfachung sind die Dichtspitzen in den Fig. 7 und Fig. 8 nicht dargestellt.

**Fig. 8** zeigt die perspektivische Darstellung aus Fig. 7 mit einem Beispiel eines ausgewuchteten Wuchtrings 124. Ein muldenförmiger Materialentnahmebereich 21 des Wuchtrings 124 ist beispielsweise mittels spanenden Abtrags, z. B. durch Fräsen oder Bohren, generiert worden. Das Wuchten kann insbesondere mittels eines statischen oder dynamischen Verfahrens durchgeführt werden.

### Bezugszeichenliste

- a: axial; Axialrichtung
- r: radial; Radialrichtung
- u: Umfangsrichtung
- A1: Abstand zwischen Leitrad-Innenring und erstem Rotorgrundkörper
- A2: Abstand zwischen Leitrad-Innenring und Wuchtring
- 100: Rotor
- 111: erster Rotorgrundkörper
- 112: Laufschaufel
- 113: Wuchtgewicht
- 114: Wuchtflansch
- 121: zweiter Rotorgrundkörper
- 122: Laufschaufel
- 123: Rotorarm
- 124: Wuchtring
- 125: Dichtspitze
- 126: radiale Bohrung im Rotorarm
- 200: Leitrad
- 201: Einlaufdichtung
- 202: Innenring
- 203: Leitschaufel
- 204: Innenzapfen
- 1: Anordnung zum formschlüssigen Anflanschen eines weiteren Rotors
- 3: Hauptdurchströmungsrichtung
- 5: Rotorinnenraum; innerhalb der Rotortrommel
- 7: Rotoraußenraum; radial äußere Seite des Rotors
- 9: Kavität
- 11: Leckageströmung
- 13: Wuchtebene
- 15: Wuchtebene
- 17: Wuchtebene
- 19: Schwerpunktsebene
- 21: Materialentnahmebereich des Wuchtrings

## Patentansprüche

1. Rotor (100) für eine Strömungsmaschine, mit wenigstens einem ersten (111) und einem zweiten (121) Rotorgrundkörper, wobei der zweite Rotorgrundkörper (121) einen Rotorarm (123) mit einer Anordnung (1) zum formschlüssigen Anflanschen des ersten (111) an den zweiten (121) Rotorgrundkörper aufweist, und wobei die Anordnung (1) auf der radial äußeren Seite (3) des Rotorarms (123) einen Wuchtring (124) aufweist,
**dadurch gekennzeichnet, dass**
der Wuchtring (124) integral mit dem Rotorarm (123) zum formschlüssigen Anflanschen des zweiten Rotorgrundkörpers (121) an den ersten Rotorgrundkörper (111) verbunden ist, wobei die Anordnung (1) am stromauf und/ oder am stromab gelegenen Ende des Rotorarms (123) angeordnet ist.

2. Rotor (100) nach Anspruch 1, wobei die Rotorgrundkörper (111, 121) zur Aufnahme von Laufschaufeln (112, 122) zum Ausbilden einer ersten (110) und einer zweiten (120) Rotorstufe vorbereitet sind.

3. Rotor (100) nach Anspruch 1, wobei die Rotorgrundkörper (110, 120) integral mit Laufschaufeln (112, 122) verbunden sind.

4. Rotor (100) nach einem der vorangegangenen Ansprüche, wobei der Rotorarm (123) wenigstens eine Dichtspitze (125) zum Verringern von Leckageströmungen (11) zwischen dem Rotor (100) und einem Leitrad (200) der Strömungsmaschine aufweist.

5. Rotor (100) nach Anspruch 4, wobei die wenigstens eine Dichtspitze (125) zum Ausbilden eines Dichtspalts gegen eine Einlaufdichtung (201) angeordnet sind.

6. Rotor (100) nach einem der vorangegangenen Ansprüche, wobei die radiale Erstreckung des Wuchtrings (124) kleiner als die radiale Erstreckung der Dichtspitzen (125) ist.

7. Rotor (100) nach einem der vorangegangenen Ansprüche, wobei der Rotorarm (123) aus einem ersten Material hergestellt ist oder ein erstes Material aufweist, und wobei der Wuchtring (124) aus einem zweiten Material hergestellt ist oder ein zweites Material aufweist, wobei das erste Material und das zweite Material unterschiedlich sind.

8. Rotor (100) nach einem der vorangegangenen Ansprüche, wobei der Wuchtring (124) wenigstens einen Bereich (126) zur Materialentnahme zum Auswuchten des Rotors (100) auf dem Umfang des Wuchtrings (124) aufweist.

9. Rotor (100) nach einem der vorangegangenen Ansprüche, wobei der erste Rotorgrundkörper (111) einen Wuchtflansch (114) mit wenigstens einem Wuchtgewicht (113) aufweist.

10. Rotor (100) nach einem der vorangegangenen Ansprüche, wobei der Rotorarm (123) eine Öffnung (126) zum Durchtritt von Fluiden aus dem Rotorinnenraum (5) in den Rotoraußenraum (7) aufweist.

11. Verdichter (300) einer Strömungsmaschine, wobei der Verdichter (300) wenigstens einen Rotor (100) nach einem der Ansprüche 1 bis 10 und wenigstes eine Statorstufe (200) mit einem Innenring (202) aufweist.

12. Verdichter (300) nach Anspruch 11, wobei der Verdichter (300) ein Hochdruckverdichter eines Flugtriebwerks ist.

## Claims

1. A rotor (100) for a turbomachine, comprising at least a first (111) and a second (121) main rotor body, wherein the second main rotor body (121) has a rotor arm (123) having an arrangement (1) for form-fitting flange mounting of the first main rotor body (111) on the second main rotor body (121), and wherein the arrangement (1) has a balancing ring (124) on the radially outer side (3) of the rotor arm (123), **characterized in that** the balancing ring (124) is integrally connected to the rotor arm (123) for form-fitting flange mounting of the second main rotor body (121) on the first main rotor body (111), wherein the arrangement (1) is arranged on the upstream or downstream end of the rotor arm (123).

2. The rotor (100) according to claim 1, wherein the first and second main rotor bodies (111, 121) are prepared to receive rotor blades (112, 122) to form a first (110) and a second (120) rotor stage.

3. The rotor (100) according to claim 1, wherein the main rotor bodies (110, 120) are integrally connected to rotor blades (112, 122).

4. The rotor (100) according to one of the preceding claims, wherein the rotor arm (123) has at least one sealing tip (125) for reducing leakage flows (11) between the rotor (100) and a guide vane (200) of the turbomachine.

5. The rotor (100) according to claim 4, wherein the at least one sealing tip (125) is arranged to form a sealing gap with respect to an inlet seal (201).

6. The rotor (100) according to one of the preceding claims, wherein the radial extent of the balancing ring (124) is less than the radial extent of the sealing tips (125).

7. The rotor (100) according to one of the preceding claims, wherein the rotor arm (123) is produced from or contains a first material, and wherein the balancing ring (124) is produced from or contains a second material, the first material and the second material are different.

8. The rotor (100) according to one of the preceding claims, wherein the balancing ring (124) has at least one region (126) for material removal for the balancing of the rotor (100) on the circumference of the balancing ring (124).

9. The rotor (100) according to one of the preceding claims, wherein the first main rotor body (111) has a balancing flange (114) having at least one balancing weight (113).

10. The rotor (100) according to one of the preceding claims, wherein the rotor arm (123) has an opening (126) for the passage of fluids from the inner rotor space (5) to the outer rotor space (7).

11. A compressor (300) of a turbomachine, wherein the compressor (300) comprises at least one rotor (100) according to one of claims 1 to 10, and at least one stator stage (200) having an inner ring (202).

12. A compressor (300) according to claim 11, wherein the compressor (300) is a highpressure compressor of an aircraft engine.

## Revendications

1. Rotor (100) pour turbomachine, comprenant au moins un premier (111) et un second (121) corps de base de rotor, le second corps de base de rotor (121) présentant un bras de rotor (123) doté d'un dispositif (1) pour le bridage par correspondance géométrique du premier (111) au second (121) corps de base de rotor et le dispositif (1) présentant un anneau d'équilibrage (124) sur la face radicalement extérieure (3) du bras de rotor (123),
**caractérisé en ce que**
l'anneau d'équilibrage (124) est raccordé en en faisant partie intégrante au bras de rotor (123) pour le bridage par correspondance géométrique du second corps de base de rotor (121) au premier corps de base de rotor (111), le dispositif (1) étant disposé à l'extrémité située en amont et/ou en aval du bras de rotor (123).

2. Rotor (100) selon la revendication 1, dans lequel les corps de base de rotor (111, 121) sont préparés pour recevoir des pales (112, 122) pour constituer un premier (110) et un second (120) niveaux de rotor.

3. Rotor (100) selon la revendication 1, dans lequel les corps de base de rotor (111, 121) sont raccordés en en faisant partie intégrante à des pales (112, 122) .

4. Rotor (100) selon une des revendications précédentes, dans lequel le bras de rotor (123) présente au moins une pointe d'étanchéité (125) pour réduire les écoulements de fuites (11) entre le rotor (100) et une roue conductrice (200) de la turbomachine.

5. Rotor (100) selon la revendication 4, dans lequel au moins une pointe d'étanchéité (125) est disposée pour constituer un intervalle d'étanchéité contre un joint d'arrivée (201).

6. Rotor (100) selon une des revendications précédentes, dans lequel l'extension radiale de l'anneau d'équilibrage (124) est inférieure à l'extension radiale des pointes d'étanchéité (125).

7. Rotor (100) selon une des revendications précédentes, dans lequel le bras de rotor (123) est fabriqué à partir d'un premier matériau ou présente un premier matériau et l'anneau d'étanchéité (124) est fabriqué à partir d'un second matériau ou présente un second matériau, le premier matériau et le second matériau étant différents.

8. Rotor (100) selon une des revendications précédentes, dans lequel l'anneau d'étanchéité (124) présente au moins une zone (126) de prélèvement de matériau pour équilibrer le rotor (100) sur la circonférence de l'anneau d'équilibrage (124).

9. Rotor (100) selon une des revendications précédentes, dans lequel le premier corps de base de rotor (111) présente une bride d'équilibrage (114) dotée d'au moins un poids d'équilibrage (113).

10. Rotor (100) selon une des revendications précédentes, dans lequel le bras de rotor (123) présente un orifice (126) pour le passage de fluides depuis l'espace intérieur du rotor (5) vers l'espace extérieur du rotor (7).

11. Compresseur (300) d'une turbomachine, le compresseur (300) présentant au moins un rotor (100) selon une des revendications 1 à 10 et au moins un niveau de stator (200) comportant un anneau intérieur (202) .

12. Compresseur (300) selon la revendication 11, dans lequel le compresseur (300) est un compresseur à haute pression d'un réacteur d'avion.s
